# EUROPEAN PATENT SPECIFICATION

(11) **EP 3 837 980 B1**
(45) Date of publication and mention of the grant of the patent: **01.03.2023**
(21) Application number: 19218654.2
(22) Date of filing: 20.12.2019
(51) Int. Cl.: A22B 5/00, A22C 17/00

(54) **MEAT PROCESSING METHOD AND APPARATUS**
FLEISCHVERARBEITUNGSVERFAHREN UND -VORRICHTUNG
PROCÉDÉ ET APPAREIL DE TRAITEMENT DE LA VIANDE

(43) Date of publication of application: 23.06.2021
(73) Proprietor: Devrone Unlimited Company, A92 F409 Ardee, County Louth (IE)
(72) Inventor: MCDONNELL, Declan Arthur, County Louth (IE); DUDECK, Sven Gerhard, 85551 Kirchheim (DE); ARNOLD, Eik, 81739 München (DE); GOLDAMMER, Matthias, 80687 Munchen (DE)
(74) Representative: Weldon O'Brien Ltd.

(56) References cited:
- WO-A1-2017/191162
- US-A1- 2008 200 107

## Description

### Introduction

The invention relates to production of animal meat products, especially from large animals such as cattle and sheep, pre or post rigor mortis.

In typical meat production there are the major stages of:
- farm animal breeding and husbandry,
- slaughter,
- chill,
- carcass preparation,
- boning, trimming, packing
- slicing, etc. to meat products, and
- dispatch.

There are very many factors involved in producing the final products, with customers having different requirements according to for example extent of fat present, extraneous muscle, membranes and bones, and manner of trimming.

The animal husbandry and indeed breeding, in addition to the manner of processing, has a major impact on the ultimate meat products in terms of morphology, composition & quality.

It is recognized that automated techniques to provide more information about the composition of a carcass can assist downstream tasks, especially for boning and trimming. For example, it is known (for example in CN105651776 and GB2247524) to capture images of carcasses and to apply image processing to ascertain data concerning the make-up of a carcass in terms of bone, fat, and lean meat quantity and distribution. However, the extent of information which may be derived is limited because the data is derived from light scattering and deflection from the surface.

US7918718 (Slagteriernes Forskninginstitut) describes in general terms use of an X-ray scanner in planning the production of meat products for production of attractive meat products. The movement of the conveyor belts may be stepwise or continuous movement ensuring that the location of the anatomical part is determined with the necessary accuracy at the preliminary examination. The conveyor belts are moving, so that detecting the location of the anatomical part relative to the reference points of the conveyor belt may be done during transport.

WO2017/191162 & WO2017/191163 (Teknologisk Institute, DK) describe that a CT-scanner may be used in different industrial environments such as in industry with food production e.g. at abattoirs, or other manufacturing companies handling biological materials such as meat pieces and where non- destructive imaging technology can be suitable to examine objects. The CT-scanner has a cooling system with a refrigerant for cooling the X-ray source. It is described that the surface of the conveyor belt is smooth and of a material where meat and fat do not stick to the surface.

US9546968 (Empire Tech Dev) also describes generally use of a CT scanner for manual grading.

US7850512 (Hurst Eger) describes use of a scanner fed by a conveyor belt and a clamping arrangement.

WO2018085879 (Scott Automation and Robotics) describes scanning and robotic cutting.

EP2047248 (Delipetkos) describes a method involving X-ray scanning for determining the average fat content of pieces of meat held in a container.

US9854817 (Foss Analytical) mentions a mechanical or electronic interlock to prevent the operation of one or both of a meat processing unit and an X-ray analyser. The system comprises a conveyor belt for receiving meat in an open box and an X-ray arrangement for the transmission and subsequent detection of X-rays having been transmitted through the meat in the box as it is moved by the conveyor belt.

US6600805 (Foss Electric) also describes use of X-ray beams for carcass analysis. A conveyor is arranged to carry a container such as a tray or an open box adapted to accommodate a random number of meat lumps of various sizes to be analysed, the conveyor means being arranged to let the container means pass the at least two fan-shaped X-ray beams.

WO2005/090964 (Marel HF) also describes X-ray carcass scanning of items on a conveyor. Computed Tomography (CT) scanners, and indeed other types of tomography scanners, are very expensive and complex items of equipment. They have been developed primarily for medical purposes, with a relatively low clarity cycle. Hence the extent of heat generated and wear-and-tear of mechanical and electronic components has not been especially challenging. If CT scanning were to be supplied to meat processing plants there are major challenges in ensuring that the equipment is reliable with the high throughputs required in an industrial manufacturing environment. Also, it is desirable to achieve optimum effective utilization of the scanning equipment due to the cost and energy consumption.

The invention addresses these issues.

### Summary

We describe a meat processing apparatus as set out in the claims.

### Detailed Description of the Invention

The invention will be more clearly understood from the following description of some embodiments thereof, given by way of example only with reference to the accompanying drawings in which:
Fig. 1 is a flow diagram for a meat processing flow from farm to retail, in which the meat processing is performed with an apparatus as described herein;
Fig. 2 is a view of a jig for carcass marking;
Fig. 3(a) is a diagrammatic sectional side view of a carrier for an anatomical part during scanning, and Fig. 3(b) is a plan view showing two lamb carcasses supported in a carrier;
Figs. 4 and 5 are plan and elevational views respectively of a part of a processing apparatus, including delivery to a CT scanning chamber and the chamber itself;
Fig. 6 shows a robotic gripper in use, for delivery of an anatomical part to/from the scanner; and Figs. 7(a) and (b) are together a more detailed view of the robotic gripper;
Fig. 8 is an end view of a board for attachment to a CT scanner carrier support;
Fig. 9 is a front view of the scanner and its and the carrier support;
Fig. 10 is a sketch illustrating the major flows into, out of, and within the scanner chamber;
Fig. 11 shows a pre-scanner inspection system; and
Fig. 12 shows an alternative layout of the meat processing apparatus, particularly showing access to and handling within the scanning chamber.

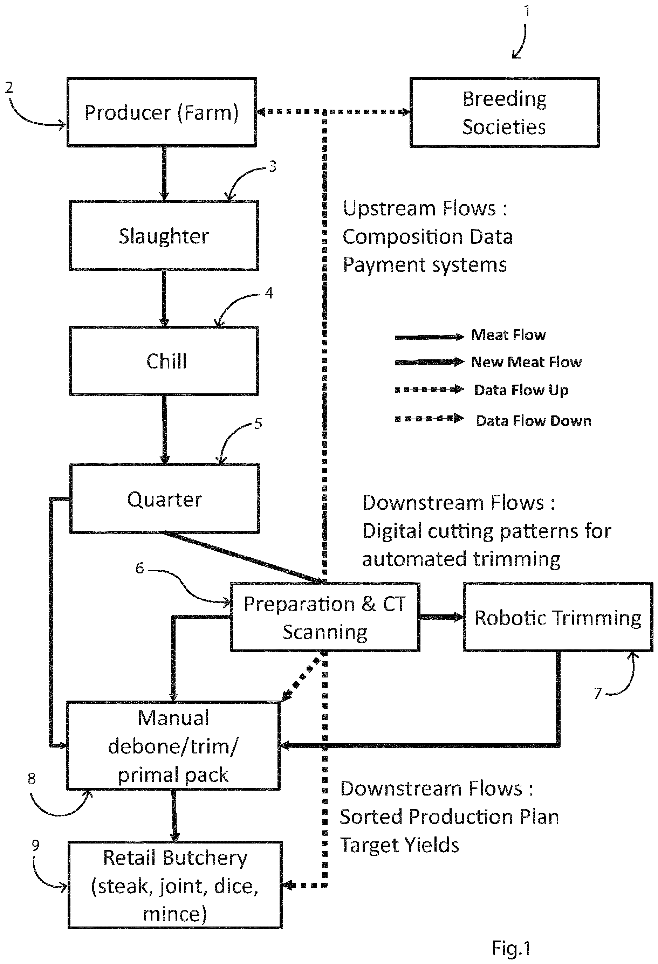

Referring to Fig. 1, the major stages of a meat product production process 1 are as follows:
2, breeding and animal husbandry on farm; using data from stage 6, see below;
3, slaughter, also using data from stage 6;
4, chill;
5, quarter, cutting to major portions, also using data from stage 6;
6, CT (computed tomography) scanning and its preparations thereof;
7, robotic trimming using data from stage 6;
8, manual debone, tripping, and primal packing using data from staged; and
9, retail butchery using data from stage 6.

The meat processing steps are implemented by an apparatus including apparatus as described below. In the scanning stage there is a scanner (230, see below) scanning with an X-ray source for emitting X-rays, an X-ray detector for detecting the emitted X-rays and a processor for converting them into electrical signals which are processed by digital data processors. The apparatus (or "production plant") is arranged to continuously supply the scanner with unscanned objects (anatomical parts) in the carriers and to remove the carriers from it and convey them back to the downstream stage 7.

The various arrows indicated by the legend show that there are major data flows for optimization of the overall process. These include scanning data being processed by a server (local and/or cloudbased) to digitize the supply chain. This provides to the animal producer quantified data concerning applicable aspects such as quantity and distribution of lean, fat and bone proportion by weight. animal value and key morphological features (for example, rib-eye size, back fat depth). This information is of benefit to the producer as feedback for improvement in breeding and management of livestock. There is also considerable feedforward information to assist with trimming and boning. This feedforward data is in the form of numerical data outputs, three-dimensional (3D) contour maps and virtual butchering data. This drives production planning & sorting decisions, setting of production butchery targets to control processes, automated/robotic trimming/boning, and also interface instructions to operators for manual trimming, boning and packing throughout the butchery process.

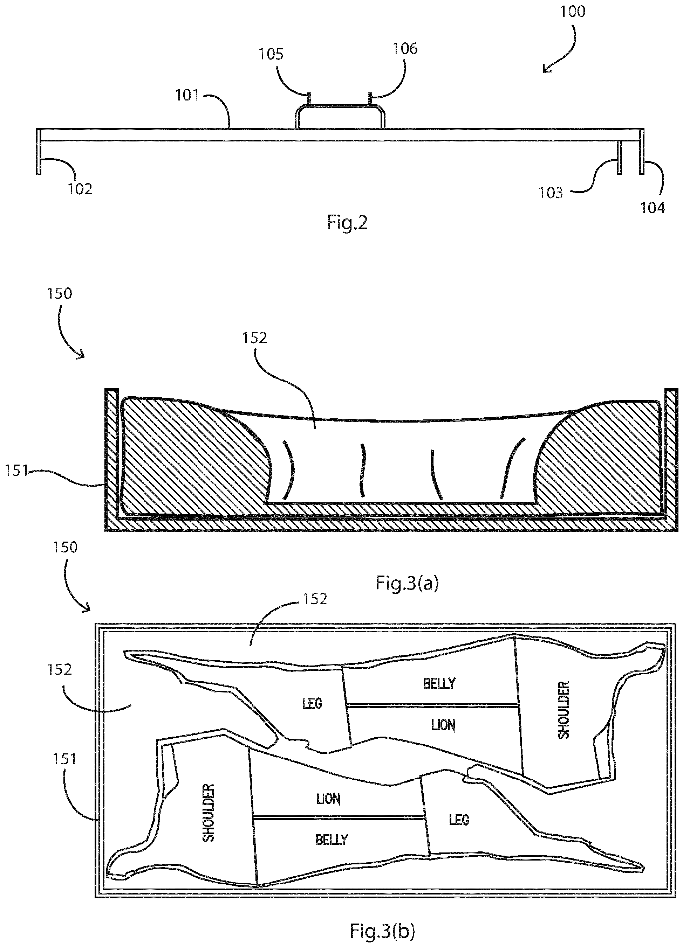

Referring to Fig. 2 a jig 100 is used at an early stage of the process when a carcass is taken from chilling. The jig has an elongate light-weight, solid or tubular body 101, forward members 102, 103 and 104, and also rear-facing members 105 and 106.

The operator applies the jig to precise locations on the carcass so that the blades 102 and 104 define the longitudinal limits of a carrier (150, see below) for the scanner. The carcass is marked using a knife using the members 102-106 for guidance so that the carcass can be cut to the maximum length. The member 103 indicates location for a rump quarter portion cut. On reversing the jig 100 the members 105 and 106 indicate and mark positions for loin tail length.

The carcass preparation involves cutting at the locations indicated by the jig 100 so that all important anatomical parts are selected and then provided for optimum placement in a carrier for CT scanning. The locations and dimensions of the jig ore only given by way of example, and may be of any desired configuration to suit the nature of the carcasses and dimensions of the carrier. In this example lamb carcasses are analyzed whole, while beef carcasses are cut according to marking done with assistance of the jig 100. However, it may be arranged that a lamb carcass is portioned also, depending on the scanning parameters.

Referring to Fig. 3(a), an anatomical part carrier 150 comprises an open rectangular box shell 151 and an insert 152. The insert 152 fits with a friction fit with or without location dowels in the shell 151, in a manner which allows easy insertion and removal of the insert 152, for interchangeability. The insert 152 is configured with a curved internal profile for support of the anatomical part in a manner which does not allow movement during scanning, and also provides the desired orientation for optimum signal/noise ratio scanning, minimum scan artifacts and simpler software reconstruction and image manipulation.

The material of the shell 151 and of the insert 152 are strong, smooth, chemically corrosionresistant, abrasion-resistant with a low XRAY absorptive capacity, such as monomer or copolymer plastics. Preferred examples are PE (Polyethylene), PP (Polypropylene), APET ((Amorphous-polyethylene terephthalate), CPET (Crystalline Polyethylene Terephthalate), PTFE (Polytetrafluoroethylene), PET (polyethylene terephthalate), or HDPE (high-density polyethylene). It is preferred that the shell 151 be of high-density polyethylene (HDPE), and that the insert is also of HDPE.

In one example the dimensions are 350mm high, 660mm wide and 1390 long.

The material may be clear, translucent or opaque. The parts have smooth surfaces with no protrusion to meat trap contamination spaces.

As set out in the description below, the carrier allows very efficient loading of the parts for inspection and also very accurate inspection in a repeatable manner. Also, the carriers 150 may be easily re-configured by replacement of the inserts 152 as applicable for the anatomical parts to be analyzed according to production requirements.

In other embodiments there may be locating male/female features such as dowel pins. In some applications (especially lamb) the carrier inserts 152 may be configured to contain more than one piece of meat in a precise orientation with optimum use of space to maximize system capacity while transferring through the CT scanning aperture. This is illustrated in Fig. 3(b).

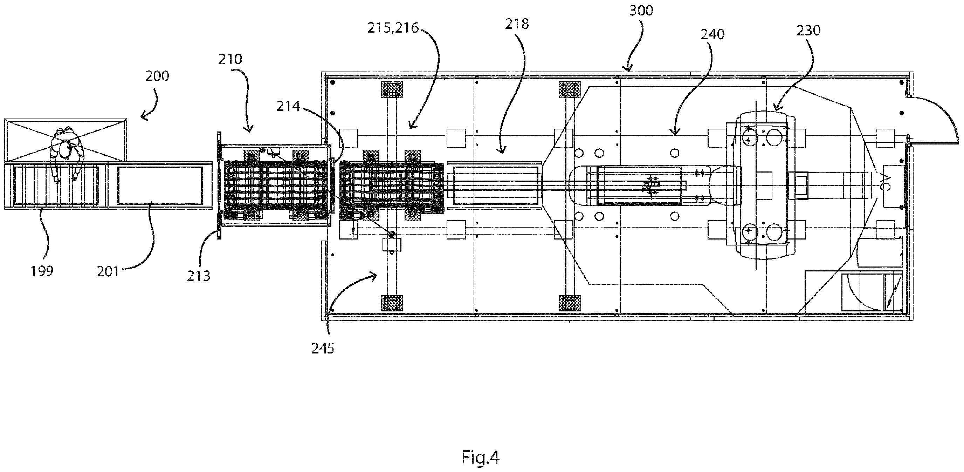

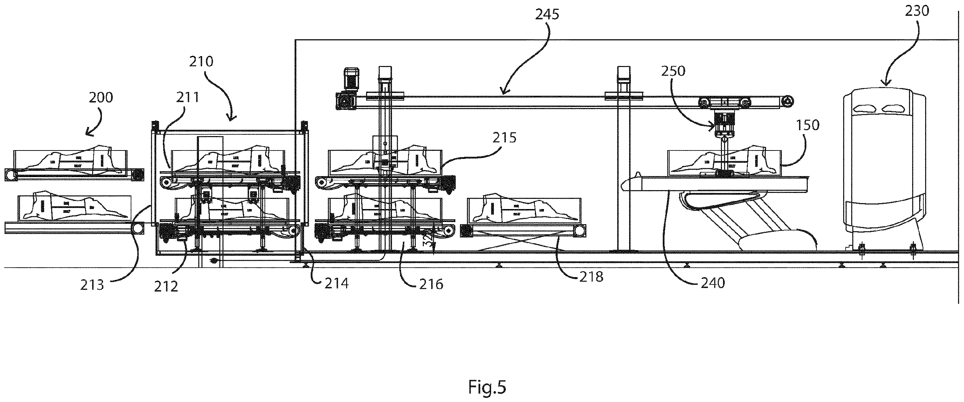

Referring to Figs. 4 and 5 the stage 6 is shown in detail. The major components are:
- 200,: Carcass/anatomical part handling, with placement on carriers 150. The placement stage 200 has a static conveyor with individually rotating rollers 199 aligned with an upper conveyor 201, and underneath the upper conveyor 201 there is a lower conveyor 202.
- 210,: Interlock zone. This has a top level 211 for inlet of carriers 150, and a lower level outlet 212 for outlet of carriers. At the ends of this zone there is an outer lead sliding door 213 (preferably 2mm to 8mm, more preferably 4mm to 5mm), and an inner lead sliding door 214 for prevention of escape of X-ray radiation scatter from the scanning chamber 300 and conditioned air to/from chamber 300. The latter is a radiation-sealed, food quality demountable enclosure for protection of staff and environmental control, the production apparatus being arranged so that there is no need for personnel inside this room during production. The interlock zone is the single port on entry and exit to and from a shielded chamber 300, the chamber 300 providing a radiation shield for protecting humans from the X-rays emitted from the X-ray source of the scanner 230. The doors may include in various examples thermal insulation layers, and their exterior surfaces may be provided by a polymer or metal.
- 245,: Robotic handling gantry between the interlock zone 210 and a CT scanner 230. The gantry 245 supports and drives a robotic gripper 250, described in more detail below. The robotic gripper operates between a buffer stage, with an upper carrier support conveyor belt 215 and a lower carrier support belt 216, both immediately inside of the interlock stage 210.
- 218,: A scissors-jacked transfer platform 218, for carriers pending exit.
- 240,: A scanner loading couch 240 for supporting a carrier 150 in the scanner 230, the couch having a food-grade finish.
- 250,: A robotic gripper 250 for automatic movement of carriers within the chamber 300, with optimum use of space, in two dimensions X and Z. The gripper payload is typically in the range of 20kg to 100kg.

In this example the carrier handling is in-line in the longitudinal and vertical directions only, however as set out in a different section of the description below it may be in all three dimensions X, Y, and Z.

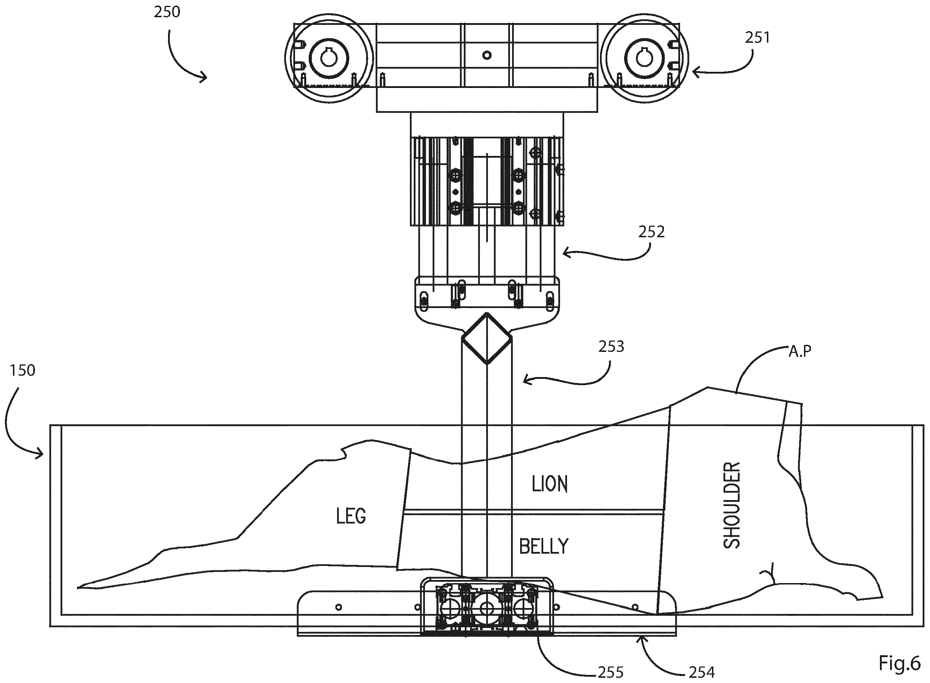

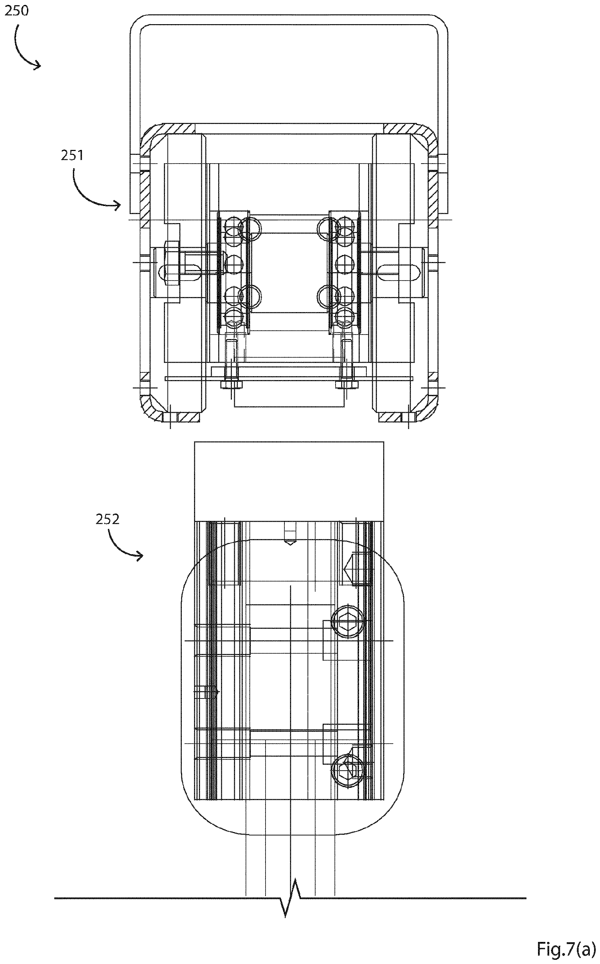

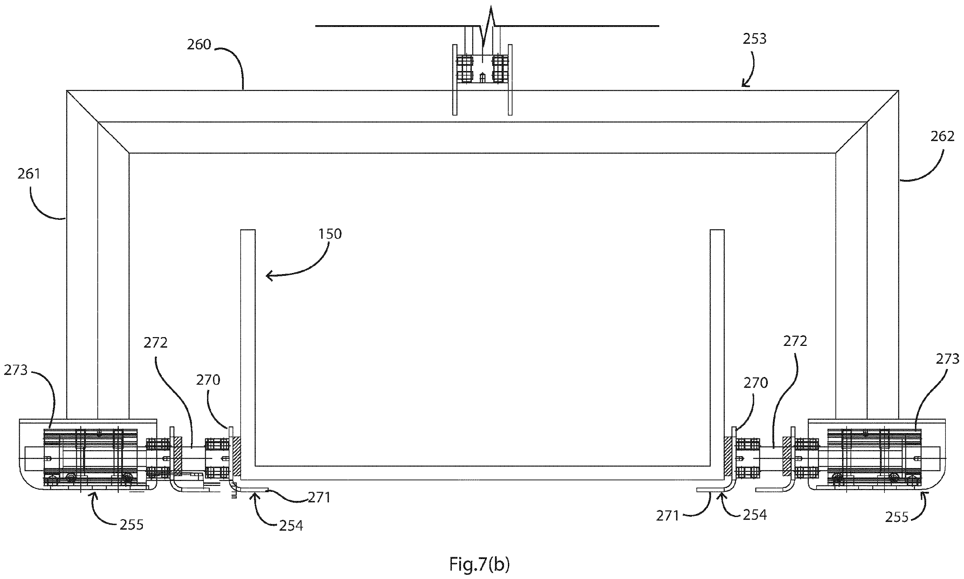

Referring to Figs. 6 and 7 the robotic gripper 250 comprises an overhead carriage 251 which runs on the gantry 245 in the longitudinal direction from the interlock stage 210 to the scanner 230. The robotic gripper 250 also comprises a housing 252 below the carriage 251, containing electric actuator or other actuators (for example pneumatically-controller, but preferably electrical) for lowering/raising the gripper 250 vertically (Z axis). The gantry is driven by a motor on the gantry at one end by a power train which is in this example a belt and sprocket drive, but in other examples may be a ball lead screw, a rack and pinion, and providing upper structural support for the downwardly-depending components. It supports a cross beam 260, at each end of which there are downwardly depending vertical arms 261 and 262, these three components defining a zone within which carriers are received.

At the lower end of each arm 261 and 262 there is an L-shaped (in cross-section) elongate seat member 254. The seat members 254 face each other and are moved in opposing manner to converge towards a carrier 150, as best shown in Fig. 7(b). This drawing shows the seat members 254 at both the retracted positions and the extended carrier-engaging positions, driven by pneumatic drives 255 (which may alternatively be hydraulic, electrical). The pneumatic actuators 255 move pistons 272 attached to the members 254, the connection being at a vertical flange 270 from which extends a horizontal ledge 271 for engaging the underneath edge of a carrier 150. This arrangement achieves a pick-up point of least movement, deformation and stress on the carrier 150.

A system controller (not shown) operates so that the receiver 253 acts in a passive manner, with the carrier 150 being moved in the longitudinal direction into the space within the receiver 253 by the powered couch 240 or powered carrier belt 215. One example is that it receives the carrier from the interlock upper conveyor 215, and another is the scanner couch 240 which moves the carrier out from the scanner 230 into position within the awaiting receiver 253.

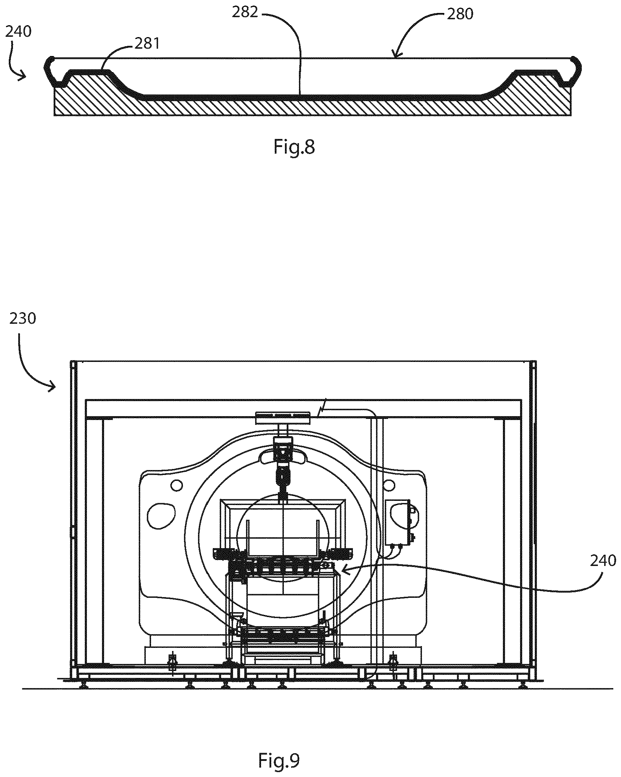

Referring to Fig. 8 the couch 240 has an innovative upper board 280 with a flat carrier-supporting surface 282, and a pair of lateral rims 281 for retaining the carrier laterally in the couch 240. The width of the board 280 is less than the carrier width so as to leave space for access by the opposed seat members 254 of the gripper 250 to carriers.

The scanner 230 is shown in front view in Fig. 9, the couch 240 being aligned with the scanner's tunnel. In this example the scanner is of the type which has only one entry and exit port for the object being analyzed. The CT scanner technology has developed over the years with this as the established arrangement, primarily for medical use. The invention is able to avail of such an established arrangement despite the fact that the application is industrial, with a much higher throughput than is the situation for medical examination. This has been achieved by the carrierhandling components described above.

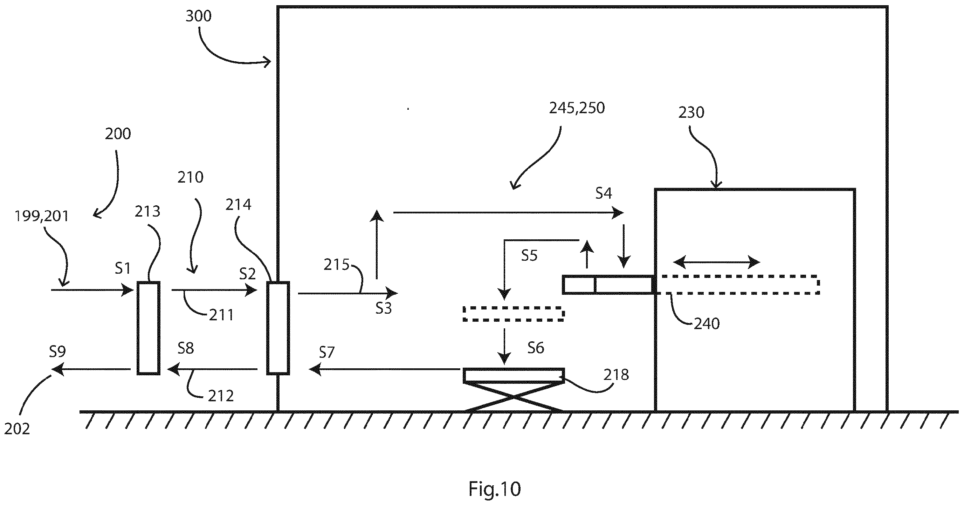

Referring to Fig. 10, the following are the movement steps.
S1, The carrier is loaded by being placed on the dead roller conveyor 199 from where it is slid onto the upper conveyor 200 to avoid damage to the upper conveyor 200 and product movement. The top conveyor 201 of the preparation stage 200 is aligned with the top conveyor 211 of the interlock zone 210.
S2, Movement into the interlock zone top level 211, with opening of the outer door 213 while the inner door 214 is closed.
S3, From the interlock zone 210 with closing of the outer door 213, movement of the conveyors 211 and 215, and opening of the inner door 214.
S4, Pick-up by the robotic gripper 250 in a movement vertically up, longitudinally towards the scanner 230, and vertically down onto the scanner conveyer ("couch") 240.
S5, After scanning, the scanner conveyor 240 is moved back out on the same side as entry and the carrier 150 is picked up by the gripper 250. The movement is up, along towards the interlock zone 210 and lowering onto the scissors-jacked platform 218. This acts as a buffer location, and avoids need for the gripper 250 to travel back the full distance towards the interlock stage 210. This allow the possibility of two grippers 250 being mounted on the gantry 245, so that at the same time one can receive an inlet carrier 150 from the conveyor 215 and the other can deposit a post-scanner carrier 150 onto the platform 218.
S6, Downward movement of the platform 218 under action of the scissors jack. The combination of the gripper 250 and the platform 218 mean that there is relatively little requirement for overhead height for equipment above the top position of the gripper. This also minimizes cycle time, maximizes capacity, and minimizes enclosure height.
S7, Movement longitudinally, by rotation of the conveyor belt at the lower level height, towards the interlock zone 210.
S8, Movement into the interlock zone 210 lower level 212, with opening of the inner door 214 while the outer door 213 is closed. This step is preferably synchronized with the step S3.
S9, Delivery from the interlock zone 210, with opening of the outer door 213 while the inner door 214 is closed.

In these steps for use of the apparatus, the carcass may be post rigor or pre rigor. The anatomical parts are preferably placed on the carriers according to a scheme to optimize or modulate the flow rate of meat volume into the scanner. For example, this scheme may alternate larger and smaller sizes of anatomical parts placed on successive carriers for entry to the port. Also, the carcasses are preferably delivered to the port on a support such as a hanger which has an identifier, the carrier is marked with the same identifier, and there is matching of the anatomical parts with the originating support after exit from the port for traceability.

The carrier 150 is seated, for entry to the scanner, on the loading conveyor 240, which has the board 280 which has a substantially planar base and a raised edge, allowing convenient gripping by the robotic gripper 250, shown in Fig. 7. Advantageously, the gripper 250 awaits movement of the carrier 150 into its volume with the gripper seats members 254 moving inwardly so that they underlie the carrier 150 and so grip it so that it can be moved according to S5. Likewise, the gripper 250 is passive until the carrier 150 is moved into its zone for commencement of the movement S4.

The scanner chamber 300 in maintained shielded for radiation safety, and for optimum scanner operation the environment is maintained at preferably 10°C to 22°C.

### CT Scanner Arrangements

The system has an automatic control circuit to automatically start and automatically remote reset the CT scanner after a set number of scans.

The CT scanner 230 has tube cooling for the high-throughput use, power modulation, and a fast return stroke, CT scan occurs under conditions to optimize image quality, tube life, and safety (80-140kV, 10-800mA, 10-20secs. 800mm maximum width tunnel & field of view).

### Scanner Optimization

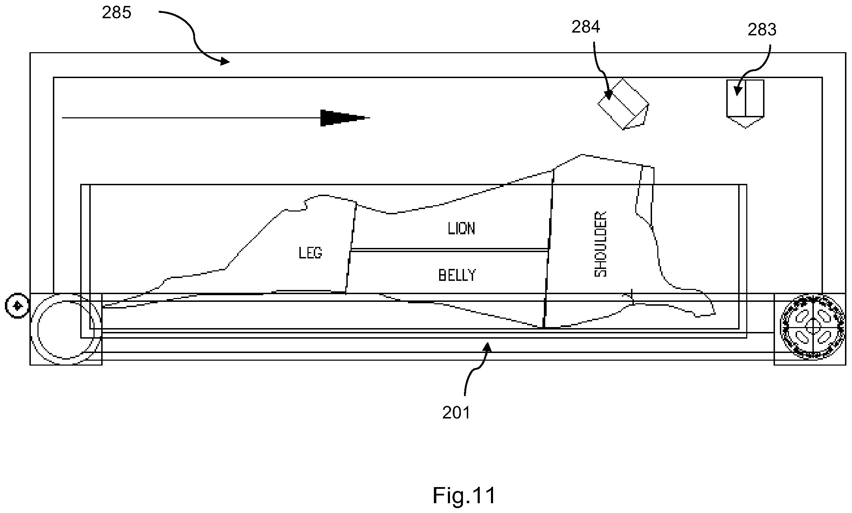

Referring also to Fig. 11, CT power is modulated during a CT scan based on meat profile and length automatically inputted during S1 using an incoming pre-scan inspection station with an inspection controller. In one example this is located before the stage 200 as there is more available space and the inspection can be done as part of loading the carriers and conveying them towards the interlock port 210. However, in other examples the inspection station can be located at any desired position before the scanner, including immediately before the scanner as the carriers are loaded onto the scanner couch. The inspection station includes a belt conveyor 201, and a position encoder. A carrier with orientated meat piece(s) inside is routed through the inspection station, which detects a meat profile with use of an overhead laser line sensor 283 coupled with offset digital color camera 284, mounted on a food grade frame 285, and a controller with interpretation software. The pre-scan inspection controller issues commands to the CT scanner controller for that particular item of meat as it is subsequently scanned on a first- in- first- out (FIFO) basis.

Deflection of the structured laser line is recorded by the camera as the carrier holding the meat part(s) is conveyed. This line deflection indicates changes in meat depth and volume coupled with its linear position relative to a fixed datum on the carrier. Return of the line to its original shape indicates the end point of the meat, at which horizontal X position is recorded. The software eliminates (crops) the images relating to the carrier alone. This data is interpreted by an algorithm which changes CT scanner voltage and current to compensate for different product depth and volume so as to minimize degradation of the XRAY tube and detector. For example, depths beyond 200mm might necessitate parameter changes from 80kV/30mA to 130kV/300mA for a defined length along the meat. Scanning is automatically stopped when the meat overall length is exceeded.

In addition, meat parts are introduced into the scanner in a sequence to facilitate tube cooling. For example, in one scheme long, deep meat pieces are immediately followed by shorter shallow meat pieces from the same or different animals. This gives time in cycles for the scanner tube to cool down and not reach maximum allowable heat dissipation (which may in extreme cases trigger shutdown).

Conditioned air (temperature 10°C, 20% RH, 1m/s flow rate) is provided to assist tube cooling without electronic damage.

The pre-scan inspection station may be located elsewhere, including immediately before the scanner. In the latter case there is the benefit of real time power control of the scanner according to the individual carrier, and this may be reliably achieved because it is immediately correlated to the carrier being introduced. However, it would be more difficult to manage inter-carrier flows, to for example introduce to the scanner a carrier with a small quantity of meat following a carrier with a large quantity of meat.

In general, the optimization of the scanner is achieved by one or both of:
intra-carrier control, in which the CT scanner modulated its power consumption in real time during scanning of the meat part(s) in a single particular carrier, using more power where there is the greatest density and/or volume in the meat part being scanned or presence of features that create scan artifacts (e.g. sharp bone edges), and/or
inter-carrier control, in which the carriers are fed to the scanner in a sequence which helps avoid over-heating and achieve good reliability, with small, medium, and large meat parts being delivered to the scanner in a desired pattern for optimization of the scanner power consumption and other scanner parameters.

### Alternative Carrier and Gripper Arrangements

In the description above it is mentioned that one gripper is sufficient for the scanner in-feed and out-feed tasks. However, it is envisaged that there may be a first gripper for picking a carrier from a first location (for example 215) and placing it onto the scanner couch (240), and a second gripper for picking a carrier from the couch and placing it at a second location (for example 218) so as to increase capacity and reduce cycle time. The first gripper and the second gripper may move along a common axis in one example, preferably synchronously along the common axis which can be parallel or orthogonal or at an oblique angle to the direction of carrier travel through the scanner.

The axis along which the first gripper and second gripper are moved may be substantially parallel or perpendicular or oblique to the movement of the table into and out of the scanner.

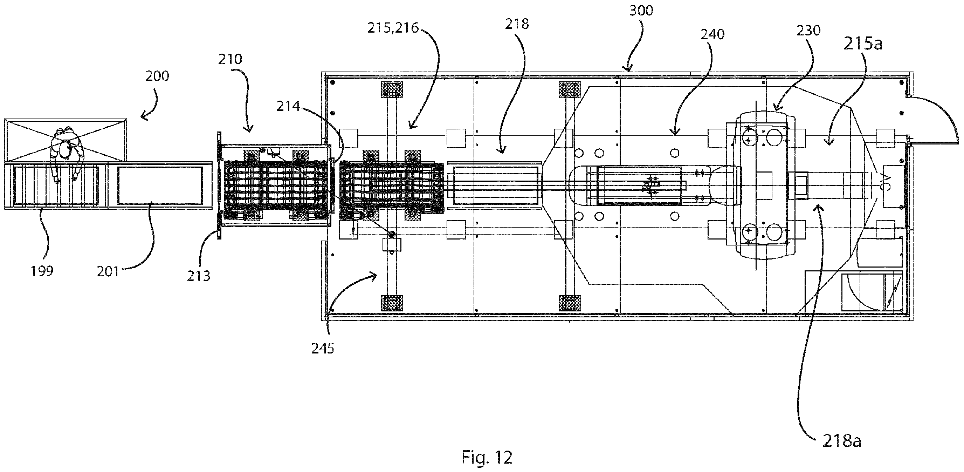

Referring to Fig. 12, in other examples, there may be a third gripper 250 for picking a carrier 150 from a third location (e.g. 215a) and placing it onto the scanner table ("couch") 240. Also, there may be a fourth gripper 250 for picking a carrier from the couch 240 and placing it at a fourth location such as conveyor 218a on the opposed side of the scanner, as shown in Fig. 12. The handling components may be arranged to move the third and the fourth grippers 250 synchronously along a further common axis, which axis may be substantially perpendicular or parallel or oblique to the movement of the table into and out of the scanner.

These arrangements may provide for the carriers 150 to enter the gantry from one lateral side with respect to the scanner longitudinal axis and to exit the gantry at the opposite side so as to increase system capacity by scanning a new carrier 150 during each stroke of the couch 240.

Under these arrangements the pick and place robotic gantry is a modified form of the gantry 245, having X, Y & Z axis articulation and may include rotational movements on one or more of the X, Y, and Z axes.

It is envisaged that the chamber which protects humans from radiation encompasses only the X-ray source, the X-ray detector, and the table locally at the scanner without also encompassing the arrangement suitable for supplying the scanner couch 240 with unscanned objects and removing scanned objects from it.

In one example, in a step a), the first gripper 250 picks a carrier 150 with a yet unscanned object from a first location. The second gripper 250 is still empty, i.e. it does not carry any carrier.

In step b), the first gripper 250 and the second gripper 250 move along a common axis until the first gripper 250 with the carrier 150 carrying the yet unscanned object reaches the table 240. Subsequently, the carrier 150 is lowered down onto the table 240 and the first gripper 250 releases the carrier 150.

In step c), the table 240 with the carrier 150 moves through the gantry of the scanner. A CT scan of the object is performed. Thus, as in step c) the carrier 150 is shown once it has already travelled through the scanner 230. While the object travels through the scanner 230, the first and second gripper 250 move back to their initial positions along their common axis.

In step d), the first gripper 250 picks another carrier 150 with a yet unscanned object from the first location. At the same time, the carrier 150 with the scanned obj ect travels back through the scanner 230 and is subsequently picked by the second gripper 250. The object may be scanned a second time while travelling back through the scanner 230 or it may not be scanned.

In step e), the first gripper 250 and the second gripper 250 move along a common axis until the first gripper 250 with the carrier 150 carrying the yet unscanned object reaches the table 240. Subsequently, the carrier 150 is lowered down onto the table and the first gripper 250 releases the carrier 150. Note that at the same time, the second gripper 250 with the carrier 150 carrying the scanned object reaches a second location.

In step f), the carrier 150 with the scanned object is released from the second gripper 250. It will be transported to the unloading station. At the same time, the table with the other carrier 150 moves through the gantry of the scanner 230. A CT scan of the object is performed. Thus, as in step f) the carrier 150 is shown once it has already travelled through the scanner 230, the carrier 150 carries a scanned object.

In step g), the first and second gripper 250 move back to their initial positions along their common axis. At the same time the carrier 150 with the scanned object travels back through the scanner 230. Optionally, it can now already be picked by the second gripper 250. The object may be scanned a second time while travelling back through the scanner 230 or it may not be scanned.

In step h), the first gripper 250 picks another carrier 150 with a yet unscanned object from the first location. In case that the carrier 150 with the scanned object has not already been picked by the second gripper 150 in step g), it needs to be picked now.

In step i), the first gripper 250 and the second gripper 250 move along a common axis in the direction denoted by the respective arrow pointing downwards. They move as far until the first gripper 250 with the carrier 150 carrying the yet unscanned obj ect reaches the table. Subsequently, the carrier 150 is lowered down onto the table and the first gripper 250 releases the carrier 150. Note that at the same time, the second gripper 250 with the carrier 150 carrying the scanned object reaches a second location.

The steps f) to i) are preferably repeated continuously for two or more cycles.

As a result, a quasi-continuous scanning of objects is achieved leading to a high throughput. At the same time, a conventional CT scanning unit can be used including a (patient) table, i.e. without major modifications as it would be the case if the objects would cross the scanning unit on a conveyor belt. The only substantial modifications comprise adding the first and second gripper and means for moving them along a common axis.

### Example of meat handling and analysis.

Take section on whole animal carcass selected for scanning.

Record carcass identifier and details into a server database.

In some cases, cut the carcass into pieces to facilitate CT scanning

For each piece
1. Scan Carcass label
2. Place into carrier 150. Scan carrier identifier into the server database.
3. Place carrier 150 onto in-feed logistics system for automatic transport to/from CT scanner and enclosure 300.
4. FOR EACH SCAN,
   (1) Carrier 150 enters room on in-feed conveyors through special lead-lined interlocked double door airlock 210.
   (2) Incoming/outgoing carriers 150 located adjacent to CT couch at optimum height to maximize speed of operation.
   (3) CT scan power is modulated based on meat profile and length.
   (4) Scanned carriers return through interlock into area in loading bay via out-feed conveyor.
5. EMPTY CARRIER
   (1) Remove scanned piece from carrier
   (2) Feed empty carrier to filling station and repeat from step 2 above.

### Advantages

It will be appreciated that the process has the following advantages and features.

The jig 100 to ensure accurate break up and length for fitting in the carrier 150 and scanning.

Orientation of the meat for optimum, due to the insert 152 of the carrier 150. Profile detection system for power modulation. This arises from planning of inlet of parts to the interlock zone, smaller parts being followed by larger parts in an optimum pattern for optimum modulation of power of the scanner 130.

The interlock shutter doors 213 and 214, gentle index conveyors 211/212 and 215/216, scissor lift platform 218, and the passive gripper 250.

Enclosure 300 with food-standard panels with integrated lead lining.

Adjustable height frame with skirts to reduce lead in floor.

Arrangement to re-suspend beef parts for ease of storage and traceability.

Also, the apparatus and process offer the following further advantages.

"Digitization" of carcasses and/or meat pieces so as to facilitate further in-silico composition and morphological analysis to improve decisions/actions at all steps in the meat supply chain.

Animal breeding practices based on meat yield.

Animal husbandry practices (feed, age at slaughter)

Animal payment systems to promote quality, environmental footprint and efficiency. Automated butchery using digitized images

Optimized sorting where meat composition and morphology is matched to downstream butchery specification (both deboning and retail butchery) to max value.

Target benchmark for downstream processing (e.g. % bone in deboning rooms).

Safe, practical & continuous CT scanning of meat at realistic industry production rates and environmental conditions.

Automated solution to minimize labor input especially environmental risks (radiation) while achieving maximum product yield.

Handling system facilitates the actioning of decisions through linking each meat piece to an animal to a specific operator & transmitting relevant instructions to said operator.

The manner in which the scanner is modified in real time helps to achieve optimum utilization and reliability of the scanner equipment. This real time control is achieved with use of relatively simple and inexpensive items of equipment for the inspection station.

The invention is not limited to the embodiments described but may be varied in construction and detail. For example, while the disclosure describes a tomography scanner (computed tomography, "CT", scanner), it is envisaged that it may alternatively be a scanner of another tomographic type, including for example MRI (Magnetic Resonance Imaging) scanning.

## Claims

1. A meat processing apparatus comprising an automated analysis stage comprising:
a radiation-shielded chamber (300),
a tomography scanner (230) with a scanner table and
a scanner controller, and arranged to perform analysis of meat parts placed in carriers on the scanner table,
a digital data processor linked with the scanner for processing scan data and providing outputs,
a port (210) for entry and exit of meat parts placed in carriers (150) into and out of the chamber for analysis by the scanner,
a handling system (245, 250) for automated movement of the carriers between the port (210) and the scanner (230), and a controller for the handling system;
wherein the port comprises an interlock chamber (210), having an inner door (214) and an outer door (213) and a controller to ensure that while the scanner is operating only one door can open; and
wherein the handling system further comprises a first gripper for picking a carrier from a first location and placing it onto the scanner table, and a second gripper for picking a carrier from the scanner table and placing it at a second location

2. A meat processing apparatus as claimed in claim 1, wherein the interlock chamber has an upper conveyor level (211) and a lower conveyor level (212), one for inlet and one for outlet of carriers before and after analysis.

3. A meat processing apparatus as claimed in claims 1 or 2, wherein the handling system comprises a gantry (245) and a robotic gripper (250) arranged to move on the gantry in at least a longitudinal direction between the port and the scanner, and comprising a gripper receiver for receiving and engaging a carrier for a meat part to be analysed.

4. A meat processing apparatus as claimed in claim 3, wherein the gripper receiver is arranged to receive a carrier (150) moving in the longitudinal direction into a volume within the receiver (253), and the gripper comprises opposed seats (254) to move laterally inwardly to engage a carrier and to retract to disengage from the carrier, and optionally the opposed seats are L-shaped, with a vertical flange (270) and a substantially horizonal seat (271) configured to engage underneath a lateral edge of the carrier.

5. A meat processing apparatus as claimed in either of claim 3 to 4, wherein the robotic gripper (250) is mounted on a carriage (251) with wheels driven to move on a rail of the gantry.

6. A meat processing apparatus as claimed in any preceding claim, wherein the handling system comprises a vertically-movable platform (218) which is movable between an upper position to receive a carrier from the robotic gripper (250) and a lower position for delivery of the carrier into the port (210).

7. A meat processing apparatus as claimed in any preceding claim, wherein the scanner comprises a loading conveyor (240) having a bed (280) with a flat planar surface (282) for supporting a carrier while allowing access by the gripper for engaging the carrier (150).

8. A meat processing apparatus as claimed in any preceding claim, wherein at least some of the carriers comprise an open-topped shell (151) and an insert (152) configured to fit without significant relative movement into the shell and to support a meat part at a desired orientation; and wherein the insert (152) comprises sloped internal walls forming a seat for a meat part with a stable orientation.

9. A meat processing apparatus as claimed in claim 8, wherein the shell and the insert are each of chemically corrosion resistant and abrasion resistant material with a low XRAY absorptive capacity, and wherein the shell and/or the insert each comprises one or more selected from of PE (Polyethylene), PP (Polypropylene), APET ((Amorphous-polyethylene terephthalate), CPET (Crystalline Polyethylene Terephthalate), PTFE (Polytetrafluoroethylene), PET (polyethylene terephthalate), or HDPE (high-density polyethylene).

10. A meat processing apparatus as claimed in any preceding claim, further comprising a jig (100) having an elongate body (101) and members such as pins or blades (102-106) protruding from the body for assistance in marking a carcass at a desired location for cutting to fit into a carrier.

11. A meat processing apparatus as claimed in any preceding claim, wherein the controller is configured to provide feedback data on meat quality determined by scanning, and for routing said feedback data to suppliers; wherein the scanner controller is configured to provide feedforward data to downstream processing stages for optimized boning and/or trimming (manual or automated).

12. A meat processing apparatus as claimed in any preceding claim, wherein the handling system comprises:
a gantry and a robotic gripper (250) arranged to move on the gantry in longitudinal and transverse directions with respect to a longitudinal axis of the scanner.

13. A meat processing apparatus as claimed in claim 12, wherein the handling system is configured to move said first and second grippers along a common axis; and wherein the axis along which the first gripper and the second gripper are moved is substantially perpendicular to the movement (longitudinal axis) of the scanner table (240) into and out of the scanner (230).

14. A meat processing apparatus as claimed in either of claims 12 or 13, wherein the handling system comprises a third gripper (250) for picking a carrier (150) from a third location and placing it onto the scanner table (240), and a fourth gripper (250) for picking a carrier (150) from the table (240) and placing it at a fourth location; wherein the third gripper (250) and the fourth gripper (250) are moved synchronously along a further common axis.

## Patentansprüche

1. Fleischverarbeitungsvorrichtung, umfassend eine automatisierte Analysestufe, umfassend:
eine gegen Strahlung abgeschirmte Kammer (300),
einen Tomographiescanner (230) mit einem Scannertisch und einer Scannersteuerung, der dazu angeordnet ist, eine Analyse von in Träger auf dem Scannertisch platzierten Fleischteilen auszuführen,
einen digitalen Datenprozessor, der mit dem Scanner verbunden ist, um Scan-Daten zu verarbeiten und Ausgaben bereitzustellen,
einen Ein-/Ausgang (210) für den Eintritt und Austritt von in Träger (150) platzierten Fleischteilen in die und aus der Kammer zur Analyse durch den Scanner,
ein Transportsystem (245, 250) zur automatisierten Bewegung der Träger zwischen dem Ein-/Ausgang (210) und dem Scanner (230), und eine Steuerung für das Transportsystem;
wobei der Ein-/Ausgang eine Schleusenkammer (210) umfasst, die eine innere Tür (214) und eine äußere Tür (213) und eine Steuerung zum Sicherstellen, dass nur eine Tür geöffnet werden kann, während der Scanner arbeitet, aufweist; und
wobei das Transportsystem ferner einen ersten Greifer zum Aufheben eines Trägers von einem ersten Ort und Platzieren desselben auf den Scannertisch und einen zweiten Greifer zum Aufheben eines Trägers von dem Scannertisch und Platzieren desselben an einen zweiten Ort umfasst.

2. Fleischverarbeitungsvorrichtung nach Anspruch 1, wobei die Schleusenkammer eine obere Fördererebene (211) und eine untere Fördererebene (212) aufweist, eine zum Einlassen und eine zum Auslassen von Trägern vor und nach der Analyse.

3. Fleischverarbeitungsvorrichtung nach Anspruch 1 oder 2, wobei das Transportsystem ein Portalgerüst (245) und einen Greifroboter (250), der dazu angeordnet ist, sich an dem Portalgerüst in mindestens einer Längsrichtung zwischen dem Ein-/Ausgang und dem Scanner zu bewegen, umfasst, und eine Greiferaufnahme zum Aufnehmen und Greifen eines Trägers für ein zu analysierendes Fleischteil umfasst.

4. Fleischverarbeitungsvorrichtung nach Anspruch 3, wobei die Greiferaufnahme dazu angeordnet ist, einen sich in der Längsrichtung bewegenden Träger (150) in ein Volumen in der Aufnahme (253) aufzunehmen, und der Greifer entgegengesetzte Sitze (254) umfasst, um sich seitlich nach innen zu bewegen, um einen Träger zu greifen, und einzufahren, um sich von dem Träger zu lösen, und wobei optional die entgegengesetzten Sitze L-förmig mit einem vertikalen Flansch (270) und einem im Wesentlichen horizontalen Sitz (271), der dazu konfiguriert ist, unter einer seitlichen Kante des Trägers zu greifen, sind.

5. Fleischverarbeitungsvorrichtung nach einem der Ansprüche 3 bis 4, wobei der Greifroboter (250) auf einem Schlitten (251) mit Rädern, die angetrieben werden, um sich auf einer Schiene des Portalgerüsts zu bewegen, angebracht ist.

6. Fleischverarbeitungsvorrichtung nach einem der vorangehenden Ansprüche, wobei das Transportsystem eine vertikal bewegliche Plattform (218) umfasst, die zwischen einer oberen Stellung zum Aufnehmen eines Trägers von dem Greifroboter (250) und einer unteren Stellung zum Zuführen des Trägers in den Ein-/Ausgang (210) bewegbar ist.

7. Fleischverarbeitungsvorrichtung nach einem der vorangehenden Ansprüche, wobei der Scanner einen Ladeförderer (240) umfasst, der ein Bett (280) mit einer ebenflächigen Oberfläche (282) zum Stützen eines Trägers, während Zugang durch den Greifer zum Greifen des Trägers (150) zugelassen wird, aufweist.

8. Fleischverarbeitungsvorrichtung nach einem der vorangehenden Ansprüche, wobei mindestens einige der Träger eine oben offene Schale (151) und einen Einsatz (152), der dazu konfiguriert ist, ohne wesentliche Relativbewegung in die Schale zu passen und ein Fleischteil in einer gewünschten Orientierung zu tragen, umfassen; und wobei der Einsatz (152) geneigte Innenwände umfasst, die einen Sitz für ein Fleischteil mit einer stabilen Orientierung bilden.

9. Fleischverarbeitungsvorrichtung nach Anspruch 8, wobei die Schale und der Einsatz jeweils aus chemisch korrosionsbeständigem und abriebbeständigem Material mit geringer Röntgenabsorptionsfähigkeit sind, und wobei die Schale und/oder der Einsatz jeweils eines oder mehrere umfasst, die aus PE (Polyethylen), PP (Polypropylen), APET (amorphem Polyethylenterephthalat), CPET (kristallinem Polyethylenterephthalat), PTFE (Polytetrafluorethylen), PET (Polyethylenterephthalat) oder HDPE (Polyethylen hoher Dichte) ausgewählt sind.

10. Fleischverarbeitungsvorrichtung nach einem der vorangehenden Ansprüche, ferner umfassend eine Hilfsvorrichtung (100) mit einem langgestreckten Körper (101) und Elementen, wie etwa Stiften oder Messern (102-106), die von dem Körper vorstehen, zur Unterstützung beim Markieren eines Kadavers an einer gewünschten Stelle zum Schneiden, um in einen Träger zu passen.

11. Fleischverarbeitungsvorrichtung nach einem der vorangehenden Ansprüche, wobei die Steuerung dazu konfiguriert ist, durch Scannen bestimmte Rückmeldungsdaten zur Fleischqualität bereitzustellen und die Rückmeldungsdaten an Lieferanten zu leiten; wobei die Scannersteuerung dazu konfiguriert ist, Vorsteuerungsdaten für nachgeschaltete Verarbeitungsstufen zum optimierten Ausbeinen und/oder Zuschneiden (manuell oder automatisiert) bereitzustellen.

12. Fleischverarbeitungsvorrichtung nach einem der vorangehenden Ansprüche, wobei das Transportsystem Folgendes umfasst:
ein Portalgerüst und einen Greifroboter (250), der dazu angeordnet ist, sich auf dem Portalgerüst in Längs- und Querrichtung in Bezug auf eine Längsachse des Scanners zu bewegen.

13. Fleischverarbeitungsvorrichtung nach Anspruch 12, wobei das Transportsystem dazu konfiguriert ist, den ersten und den zweiten Greifer entlang einer gemeinsamen Achse zu bewegen; und wobei die Achse, entlang der der erste Greifer und der zweite Greifer bewegt werden, im Wesentlichen rechtwinklig zu der Bewegung (Längsachse) des Scannertischs (240) in den und aus dem Scanner (230) ist.

14. Fleischverarbeitungsvorrichtung nach einem der Ansprüche 12 oder 13, wobei das Transportsystem einen dritten Greifer (250) zum Aufheben eines Trägers (150) von einem dritten Ort und Platzieren desselben auf den Scannertisch (240) und einen vierten Greifer (250) zum Aufheben eines Trägers (150) von dem Tisch (240) und Platzieren desselben an einen vierten Ort umfasst; wobei der dritte Greifer (250) und der vierte Greifer (250) synchron entlang einer weiteren gemeinsamen Achse bewegt werden.

## Revendications

1. Appareil de transformation de la viande comprenant une étape d'analyse automatisée comprenant :
une chambre protégée contre les rayonnements (300),
un scanner de tomographie (230) doté d'une table de scanner et d'un dispositif de commande de scanner, et agencé pour réaliser une analyse de morceaux de viande placés dans des éléments de transport sur la table de scanner,
un processeur de données numériques relié au scanner pour un traitement de données de balayage et une fourniture de sorties,
un port (210) pour une entrée et une sortie de morceaux de viande placés dans des éléments de transport (150) dans et en dehors de la chambre pour une analyse par le scanner,
un système de manipulation (245, 250) pour un déplacement automatisé des éléments de transport entre le port (210) et le scanner (230), et un dispositif de commande pour le système de manipulation ;
dans lequel le port comprend une chambre de verrouillage (210), présentant une porte interne (214) et une porte externe (213) et un dispositif de commande pour assurer que seule une porte puisse être ouverte pendant le fonctionnement du scanner ; et
dans lequel le système de manipulation comprend en outre un premier dispositif de préhension pour saisir un élément de transport à partir d'un premier emplacement et le placer sur la table de scanner, et un deuxième dispositif de préhension pour saisir un élément de transport à partir de la table de scanner et le placer à un deuxième emplacement.

2. Appareil de transformation de la viande selon la revendication 1, dans lequel la chambre de verrouillage présente un niveau de convoyeur supérieur (211) et un niveau de convoyeur inférieur (212), un pour une entrée et un pour une sortie d'éléments de transport avant et après analyse.

3. Appareil de transformation de la viande selon les revendications 1 ou 2, dans lequel le système de manipulation comprend un portique (245) et un dispositif de préhension robotique (250) agencé pour se déplacer sur le portique dans au moins une direction longitudinale entre le port et le scanner, et comprenant un élément de réception de dispositif de préhension pour recevoir et se mettre en prise avec un élément de transport pour l'analyse d'un morceau de viande.

4. Appareil de transformation de la viande selon la revendication 3, dans lequel l'élément de réception de dispositif de préhension est agencé pour recevoir un élément de transport (150) se déplaçant dans la direction longitudinale dans un volume au sein de l'élément de réception (253), et le dispositif de préhension comprend des surfaces d'appui opposées (254) pour se déplacer latéralement vers l'intérieur pour se mettre en prise avec un élément de transport et se rétracter pour se libérer de l'élément de transport, et éventuellement les surfaces d'appui opposées sont en forme de L, avec un rebord vertical (270) et une surface d'appui (271) sensiblement horizontale configurée pour se mettre en prise sous un bord latéral de l'élément de transport.

5. Appareil de transformation de la viande selon l'une des revendications 3 à 4, dans lequel le dispositif de préhension robotique (250) est monté sur un chariot (251) doté de roues entraînées pour se déplacer sur un rail du portique.

6. Appareil de transformation de la viande selon l'une quelconque des revendications précédentes, dans lequel le système de manipulation comprend une plateforme déplaçable verticalement (218) qui peut être déplacée entre une position supérieure pour recevoir un élément de transport à partir du dispositif de préhension robotique (250) et une position inférieure pour délivrer l'élément de transport dans le port (210).

7. Appareil de transformation de la viande selon l'une quelconque des revendications précédentes, dans lequel le scanner comprend un convoyeur de chargement (240) présentant un lit (280) doté d'une surface plane plate (282) pour supporter un élément de transport tout en permettant un accès par le dispositif de préhension pour se mettre en prise avec l'élément de transport (150).

8. Appareil de transformation de la viande selon l'une quelconque des revendications précédentes, dans lequel au moins certains des éléments de transport comprennent une enveloppe à couvercle ouvert (151) et un insert (152) configuré pour s'ajuster sans mouvement relatif significatif dans l'enveloppe et pour supporter un morceau de viande à une orientation souhaitée ; et dans lequel l'insert (152) comprend des parois internes inclinées formant une surface d'appui pour un morceau de viande avec une orientation stable.

9. Appareil de transformation de la viande selon la revendication 8, dans lequel l'enveloppe et l'insert sont chacun en matériau chimiquement résistant à la corrosion et à l'abrasion avec une faible capacité d'absorption des rayons x, et dans lequel l'enveloppe et/ou l'insert comprennent chacun un ou plusieurs éléments choisis parmi du PE (polyéthylène), du PP (polypropylène), de l'APET (polyéthylène téréphtalate amorphe), du CPET (polyéthylène téréphtalate cristallin), du PTFE (polytétrafluoroéthylène), du PET (polytéréphtalate d'éthylène), ou de l'HDPE (polyéthylène de haute densité).

10. Appareil de transformation de la viande selon l'une quelconque des revendications précédentes, comprenant en outre un gabarit (100) présentant un corps allongé (101) et des éléments tels des broches ou des lames (102-106) faisant saillie du corps pour aider au marquage d'une carcasse à un emplacement souhaité pour un découpage pour un ajustement dans un élément de transport.

11. Appareil de transformation de la viande selon l'une quelconque des revendications précédentes, dans lequel le dispositif de commande est configuré pour fournir des données de retour sur une qualité de la viande déterminée par balayage, et pour un routage desdites données de retour vers des fournisseurs ; dans lequel le dispositif de commande de scanner est configuré pour fournir des données d'anticipation à des étapes de transformation en aval pour optimiser un désossage et/ou un parage (manuel ou automatisé).

12. Appareil de transformation de la viande selon l'une quelconque des revendications précédentes, dans lequel le système de manipulation comprend :
un portique et un dispositif de préhension robotique (250) agencé pour se déplacer sur le portique dans des directions longitudinale et transversale par rapport à un axe longitudinal du scanner.

13. Appareil de transformation de la viande selon la revendication 12, dans lequel le système de manipulation est configuré pour déplacer lesdits premier et deuxième dispositifs de préhension le long d'un axe commun ; et dans lequel l'axe le long duquel le premier dispositif de préhension et le deuxième dispositif de préhension sont déplacés est sensiblement perpendiculaire au mouvement (axe longitudinal) de la table de scanner (240) dans et en dehors du scanner (230).

14. Appareil de transformation de la viande selon l'une des revendications 12 ou 13, dans lequel le système de manipulation comprend un troisième dispositif de préhension (250) pour saisir un élément de transport (150) à partir d'un troisième emplacement et le placer sur la table de scanner (240), et un quatrième dispositif de préhension (250) pour saisir un élément de transport (150) à partir de la table (240) et le placer à un quatrième emplacement ; dans lequel le troisième dispositif de préhension (250) et le quatrième dispositif de préhension (250) sont déplacés de manière synchrone le long d'un autre axe commun.
